Europäisches Patentamt

European Patent Office

Office européen des brevets

(19)

(11) **EP 0 586 771 B1**

(12) **EUROPÄISCHE PATENTSCHRIFT**

(45) Veröffentlichungstag und Bekanntmachung des Hinweises auf die Patenterteilung:
**08.04.1998 Patentblatt 1998/15**

(51) Int Cl.⁶: **G03B 27/54**

(21) Anmeldenummer: **92810689.7**

(22) Anmeldetag: **09.09.1992**

(54) **Beleuchtungssystem für fotografische Kopiergeräte**

Illumination system for photographic printers

Système d'illumination pour copieurs photographiques

(84) Benannte Vertragsstaaten:
**CH DE FR GB IT LI**

(43) Veröffentlichungstag der Anmeldung:
**16.03.1994 Patentblatt 1994/11**

(73) Patentinhaber: **GRETAG IMAGING AG**
**CH-8105 Regensdorf (CH)**

(72) Erfinder: **Jenny, Reinhard**
**CH-5400 Ennetbaden (CH)**

(74) Vertreter: **Schwabe - Sandmair - Marx**
**Stuntzstrasse 16**
**81677 München (DE)**

(56) Entgegenhaltungen:
**EP-A- 0 000 450**    **EP-A- 0 025 849**
**EP-A- 0 046 732**    **DE-A- 3 226 408**
**DE-A- 3 629 711**    **NL-A- 119 317**

**Beschreibung**

Die Erfindung betrifft ein Beleuchtungssystem für fotografische Kopiergeräte gemäss dem Oberbegriff des unabhängigen Patentanspruchs.

In gängigen fotografischen Kopiergeräten werden Kopien von Kopiervorlagen üblicherweise derart erstellt, dass die Kopiervorlagen, beispielsweise in Form von Bildfeldern eines Negativfilmstreifens, ausgemessen und anschliessend mit Hilfe der erforderlichen Kopierlichtmengen auf fotografisches Kopiermaterial, beispielsweise auf Fotopapier, aufbelichtet werden. Bei der Aufbelichtung wird dabei das auf das Fotopapier aufzubelichtende Bildfeld mit Hilfe eines Beleuchtungssystems und einer Abbildungsoptik auf das Papier abgebildet. Um eine möglichst getreue Wiedergabe der Vorlage zu erhalten, wird zunächst das von einer Lichtquelle, beispielsweise einer Glühlampe kommende Licht "eingefärbt". Dieses Einfärben des Lichts erfolgt mit Hilfe von optischen Farbfiltern, die in den Strahlengang einbringbar sind. Das eingefärbte Licht wird anschliessend zu der Vorlage geführt (z.B. zu einem Negativ), die auf das Fotopapier aufbelichtet werden soll, und beaufschlagt die Vorlage. Der Vorlage im Lichtweg nachfolgend ist eine Abbildungsoptik vorgesehen, mit deren Hilfe dann die beleuchtete Vorlage auf das Fotopapier abgebildet wird.

Ein Beleuchtungssystem dieser Art ist beispielsweise in der DE 32 26 408 A1 beschrieben. In dem dort beschriebenen Beleuchtungssystem ist ein Lampenhaus mit einer Lichtquelle und einem Ellipsoid-Spiegel zur besseren Nutzung des von der Lichtquelle abgestrahlten Lichts vorgesehen, wobei die Glühwendel der Lichtquelle im ersten Brennpunkt des Ellipsoid-Spiegels angeordnet ist. Das vom Lampenhaus kommende Licht wird in seinem Verlauf mit Hilfe einer Einrichtung eingefärbt, welche in den Strahlengang einschwenkbare Farbfilter und eine Blende mit einer Blendenöffnung umfasst. Diese Einrichtung ist in einem definierten Abstand vor oder nach dem zweiten Brennpunkt des Ellipsoid-Spiegels so angeordnet, dass der innere Bereich der Blendenöffnung im Schatten der Lichtquelle liegt. Der Abstand ist dabei von dem Durchmesser der Blendenöffnung, von der kleinen Halbachse der dem Ellipsoid-Spiegel zugrunde liegenden Ellipse und von der Brennweite dieser Ellipse abhängig.

Die Farbfilter dieser Einrichtung umfassen bei dem beschriebenen Beleuchtungssystem drei Filterbatterien. Jede Filterbatterie deckt dabei im eingeschwenkten Zustand etwa ein Drittel der Querschnittsfläche des durch die Blendenöffnung tretenden Lichtkegels ab, wobei das Einschwenken der jeweiligen Filterbatterie in den Strahlengang mechanisch erfolgt.

Solche Filterbatterien weisen allerdings Nachteile auf. So ist zum einen beim mechanischen Einschwenken solcher Filter nicht immer gewährleistet, dass die einzelnen Filtergläser der Filterbatterien genau gleich tief in den Lichtkegel eintauchen, d.h. dass sie zu jedem Zeitpunkt einen genau gleich grossen Teil der Querschnittsfläche des durch die Blendenöffnung durchtretenden Lichtkegels abdecken. Dies ist beim mechanischen Einschwenken der Filtergläser auch mehr oder weniger unvermeidbar. Als Folge kann dieses mechanisch bedingte ungleichmässige Eintauchen der Filtergläser Inhomogenitäten der Intensitätsverteilung auf dem Negativ zur Folge haben bzw. eine von der gewünschten Intensitätsverteilung abweichende Intensitätsverteilung. Ausserdem ist beim Eintauchen der Filtergläser in den Strahlengang auch möglich, dass die Filterränder bzw. ihre Formen mehr oder weniger kontrastreiche Strukturen in der Intensitätsverteilung erzeugen. Die Folge dieser von der gewünschten Intensitätsverteilung abweichenden Intensitätsverteilung auf dem Negativ ist wiederum eine entsprechende Beeinträchtigung der farbtreuen Wiedergabe des Inhalts des Negativs auf dem Fotopapier.

Dies kommt noch um so mehr zur Geltung, als die Transmissionseigenschaften der optischen Filtergläser für die jeweilige Farbe in den drei Filterbatterien fertigungsbedingt so gut wie nie genau identisch sind, sodass beim Einschwenken der Filter(gläser) in den Strahlengang bestimmte Teile des durch die Blendenöffnung durchtretenden Lichtkegels stärker oder schwächer angefärbt werden. Zum anderen sind auch die Transmissionseigenschaften solcher Filtergläser nicht über die ganze Fläche der Filtergläser gleichmässig (homogen) und weisen ausserdem eine gewisse Struktur (sogenannte Dichtestruktur) auf. Diese Struktur der Filter kann dann auch auf der Vorlage (Negativ) vorhanden sein und wird somit auch von der Abbildungsoptik auf das Kopiermaterial (Fotopapier) mit abgebildet. Je tiefer das jeweilige Filterglas in den Strahlengang hinein bewegt wird, desto stärker können sich die Form und Ungleichmässigkeiten in den Transmissionseigenschaften des Filterglases bemerkbar machen. Die Folge kann eine inhomogene bzw. eine von der gewünschten Intensitätsverteilung des Lichts der jeweiligen Farbe abweichende Intensitätsverteilung auf dem Negativ ebenso wie die Abbildung der Struktur des Filterglases sein. Auf diese Weise kann dann auch mehr oder weniger stark die farbtreue Wiedergabe des Inhalts des Negativs auf dem Fotopapier beeinträchtigt werden, da die Abbildungsoptik lediglich das Negativ auf das Fotopapier abbildet.

Die DE 36 29 711 A1 zeigt ein Beleuchtungssystem bei dem die in einer Zwischenbildebene angeordnete Filtereinrichtung durch einen Kondensor in die Eintrittspupille der Abbildungsoptik abgebildet wird, d.h. ein Randstrahl in der Vorlagenebene kreuzt die optische Achse in der Eintrittspupille wie auch am Ort der Filtereinrichtung.

Es ist daher eine Aufgabe der Erfindung, ein Abbildungssystem der genannten Art zu schaffen, welches auf einfache Art eine möglichst farbtreue Wiedergabe einer Vorlage ermöglicht. Insbesondere soll auch eine homogene bzw. gewünschte Intensitätsverteilung auf dem Negativ erzielt und die Abbildung von Strukturen der Filtergläser vermieden werden. Ferner soll auf einfache Art und Weise eine Änderung der Intensität möglich sein, mit der die Vorlage beleuchtet wird, ohne dabei aber die Homogenität bzw. die gewünschte Intensitätsverteilung wesentlich zu beeinträchtigen.

Erfindungsgemäss wird diese Aufgabe durch ein Beleuchtungssystem nach Anspruch 1 gelöst, bei dem die Lichtquelle entlang der optischen Achse verschiebbar ist und bei dem die Einrichtung zum Einfärben des Strahlengangs im Strahlengang zwischen der Lichtquelle und der optischen Einheit so angeordnet ist, dass ein Strahl, der durch einen Randpunkt der Vorlage verläuft und am Ort der Eintrittspupille der Abbildungsoptik die optische Achse kreuzt, auch am Ort der Einrichtung zum Einfärben die optische Achse kreuzt. Durch diese besondere Art und Weise der Anordnung erreicht man, dass die Abbildung von Strukturen der Filtergläser vermieden wird, wodurch es auch möglich ist, die Beleuchtungsintensität zu ändern (durch Bewegen der Filtergläser tiefer in den Strahlengang hinein), ohne die Homogenität der Intensitätsverteilung wesentlich zu beeinträchtigen. Es ist daher auf diese Weise insbesondere möglich, die Intensität auch dann im wesentlichen homogen zu variieren, wenn die Filtergläser, z.B. mechanisch bedingt, nicht genau gleich tief in den Strahlengang eingetaucht sind. Im Extremfall ist es sogar möglich, ein Filterglas völlig asymmetrisch in den Lichtkegel einzuführen und die Beleuchtungsintensität zu variieren ohne die Homogenität der Intensitätsverteilung wesentlich zu beeinträchtigen.

In einem Ausführungsbeispiel umfasst die optische Einheit zur Erzeugung einer gewünschten Intensitätsverteilung eine Feldlinse, die im Bereich des zweiten Brennpunkts des Ellipsoid-Spiegels angeordnet ist, sowie einen im Strahlengang der Feldlinse nachgeschalteten Lichtschacht. Der Lichtschacht ist dabei in einem solchen Abstand von der Feldlinse angeordnet, dass diese eine durch den Scheitel des Ellipsoid-Spiegels bzw. eine zwischen dem Scheitel und dem ersten Brennpunkt verlaufende und zur optischen Achse senkrechte Ebene auf die Streuscheibe abbildet.

In einem weiteren Ausführungsbeispiel oder in einer Weiterbildung des genannten Ausführungsbeispiels des Beleuchtungssystems sind zwischen der Einrichtung zum Einfärben des Lichts und der optischen Einheit zur Erzeugung einer gewünschten Intensitätsverteilung Korrekturplatten angeordnet. Diese Korrekturplatten dienen der Unterstützung der Homogenisierung bzw. zur Erzeugung einer gewünschten Intensitätsverteilung auf der Vorlage und sind besonders zur Korrektur von asymmetrischen, in Abhängigkeit vom Strahlwinkel unterschiedlichen, Intensitäten.

In einer Weiterbildung des Beleuchtungssystems ist der optischen Einheit bzw. dem Lichtschacht ein Strahlteiler vorgeschaltet, der einen Teil des Lichts für eine Lichtmessung aus dem Strahlengang auskoppelt. Eine solche Messung kann zum Beispiel für eine Messung der einzelnen Farbanteile im Lichtkegel und damit auch zur Regelung der Position der Filtergläser verwendet werden, indem in Abhängigkeit vom Messergebnis die Filtergläser tiefer in den Lichtkegel hinein bzw. weiter aus dem Lichtkegel heraus geschwenkt werden.

In einer Weiterbildung des Beleuchtungssystems ist der Einrichtung zum Einfärben des Lichts ein Wärmeschutzfilter und ein Kammfilter vorgeschaltet. Der Zweck des Wärmeschutzfilters ist unmittelbar durch seinen Namen einleuchtend. Das Kammfilter, bei dem der Zweck sich nicht unmittelbar aus seinem ergibt, ist nur für Licht in den Spektralbereichen transparent, für die das Kopiermaterial empfindlich ist und unterdrückt bzw. dämpft sehr stark die anderen Spektralanteile des vom Lampenhaus kommenden Lichts.

Im folgenden wird die Erfindung anhand der Zeichnung näher erläutert; es zeigen in schematischer Darstellung:

Fig.1a      ein Ausführungsbeispiel des erfindungsgemässen Beleuchtungssystems,

Fig.1b      einen vergrösserten Ausschnitt des Beleuchtungssystems aus Fig. 1a

Fig. 2      ein Ausführungsbeispiel einer längs der optischen Achse verschiebbaren Lichtquelle

Fig. 3      einen weiteren vergrösserten Ausschnitt des Beleuchtungssystems der Fig. 1 mit den verschiedenen von der Lichtquelle erzeugten Strahlgruppen,

Fig.4a      ein weiteres Ausführungsbeispiel des erfindungsgemässen Beleuchtungssystems im Längsschnitt,

und

Fig.4b      das Ausführungsbeispiel des Beleuchtungssystems der Fig. 4a in einer Aufsicht.

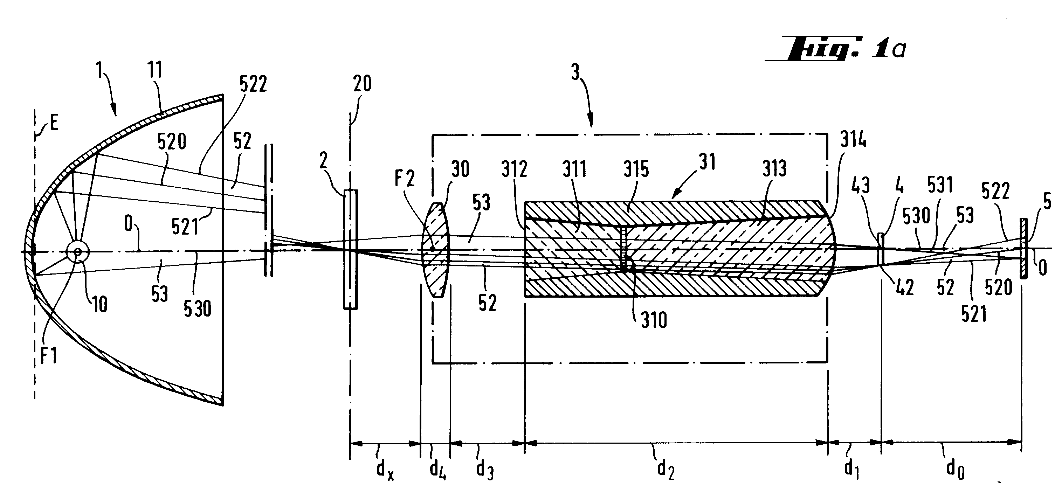

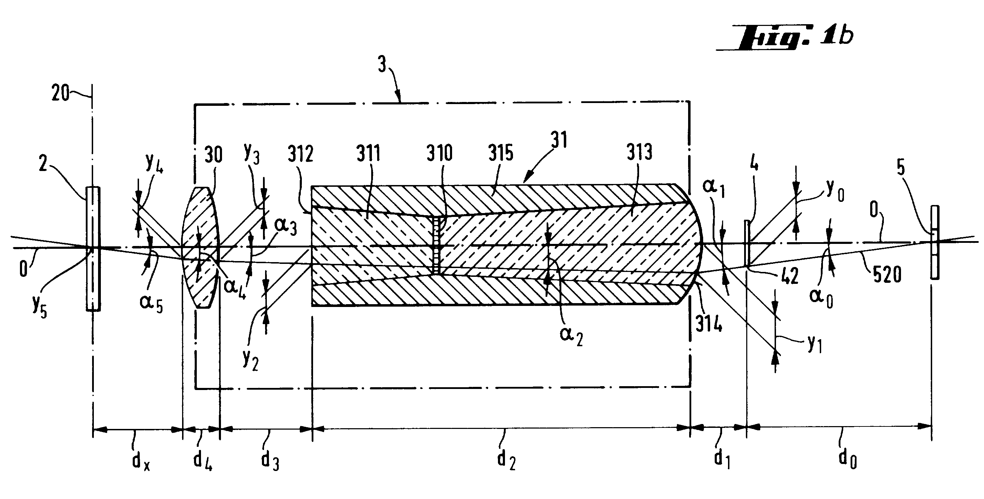

Das in Fig. 1a gezeigte Ausführungsbeispiel des erfindungsgemässen Beleuchtungssystems umfasst im wesentlichen ein Lampenhaus 1 mit einer Lichtquelle 10 und einem Ellipsoid-Spiegel 11. Die Lichtquelle 10 ist dabei im Bereich des ersten Brennpunkts F1 des Ellipsoid-Spiegels 11 angeordnet und längs der optischen Achse O des Systems verschiebbar. Das vom Lampenhaus kommende Licht beaufschlagt eine optische Einheit 3 zur Erzeugung einer gewünschten Verteilung der Beleuchtungsintensität auf einer Vorlage 4. Die optische Einheit 3 umfasst in dem gezeigten Ausführungsbeispiel eine Feldlinse 30, die im Bereich des zweiten Brennpunkts F2 des Ellipsoid-Spiegels 11 angeordnet ist, und die das Licht in einen ebenfalls zur optischen Einheit 3 gehörenden Lichtschacht 31 führt, in welchem eine Streuscheibe 310 zur Streuung des in den Lichtschacht 31 gelangten Lichts vorgesehen ist. Dabei ist der Lichtschacht in einem solchen Abstand zur Feldlinse 30 angeordnet, dass die Feldlinse 30 eine durch den Scheitel des Ellipsoid-Spiegels 11 verlaufende Ebene E auf die Streuscheibe 310 abbildet. Dem Lichtschacht 31 nachfolgend ist die Vorlage 4 zu erkennen, die von dem vom Lichtschacht 31 kommenden Licht beaufschlagt wird. Die Vorlage 4 wird mittels einer im Strahlengang nach der Vorlage 4 angeordneten Abbildungsoptik, welche durch ihre Eintrittspupille 5 repräsentiert ist, auf fotografisches Kopiermaterial (nicht dargestellt) abgebildet.

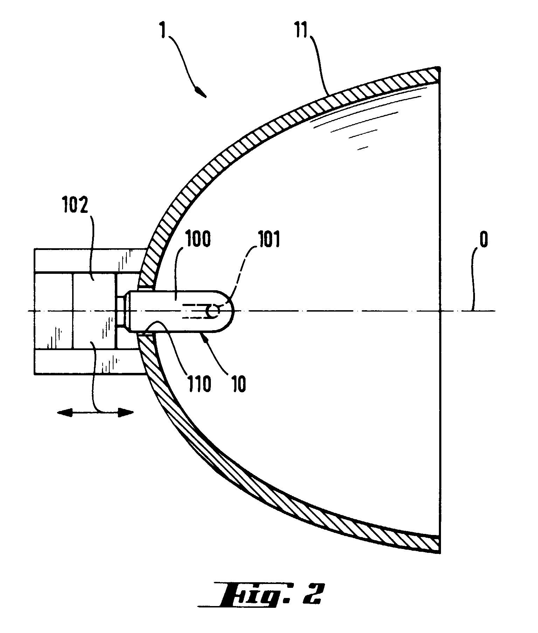

Eine Möglichkeit, wie die Lichtquelle 10 längs der optischen Achse O des Systems verschiebbar sein kann, ist in Fig. 2 schematisch angedeutet. Die durch eine Öffnung 110 ins Innere des Ellipsoid-Spiegels 11 einführbare Lichtquelle 10 umfasst eine von einem Glaskörper 100 umgebene Glühwendel 101. Der Glaskörper 100 ist durch die Öffnung 110 nach aussen geführt und ausserhalb des Spiegels 11 mit einem Verstellfuss 102 verbunden, mit dessen Hilfe die Lichtquelle von aussen längs der optischen Achse O des Systems verschiebbar ist. Im Normalfall ist die Glühwendel 101 mehr oder weniger genau im ersten Brennpunkt F1 des Ellipsoid-Spiegels 11 angeordnet und nur um eine relativ kurze Strecke vor oder hinter den Brennpunkt F1 verschiebbar. Die Verschiebbarkeit der Lichtquelle 10 dient in erster Linie dazu, die Intensitätsverteilung in der Ebene der Vorlage 4 zu variieren, um im Zusammenwirken mit der optischen Einheit 3 eine gewünschte Intensitätsverteilung auf der Vorlage 4 bzw. nachfolgend auf dem Kopiermaterial zu erreichen.

Der Lichtschacht 31 ist erfindungsgemäss aus zwei kegelstumpfartigen zusammenfügbaren Glaskörpern 311 und 313 gebildet, zwischen denen die Volumenstreuscheibe 310 angeordnet ist, die beispielsweise als Acrylscheibe ausgebildet sein kann. Optional kann auch die Eintrittsfläche 312 des Glaskörpers 311 und damit des Lichtschachts 31 ebenfalls als Streuscheibe zur Vorstreuung des in den Lichtschacht 31 eintretenden Lichts ausgebildet sein, dies ist aber aus Gründen der besseren Übersichtlichkeit in den Zeichnungsfiguren unberücksichtigt gelassen. Die Austrittsfläche 314 des Glaskörpers 313 und damit des Lichtschachts 31 ist konvex ausgebildet, wie dies in Fig. 1a angedeutet ist. Die Glaskörper 311 und 313 können dabei in einem sie umgebenden Zylinder 315, der beispielsweise aus Aluminium bestehen kann, angeordnet sein.

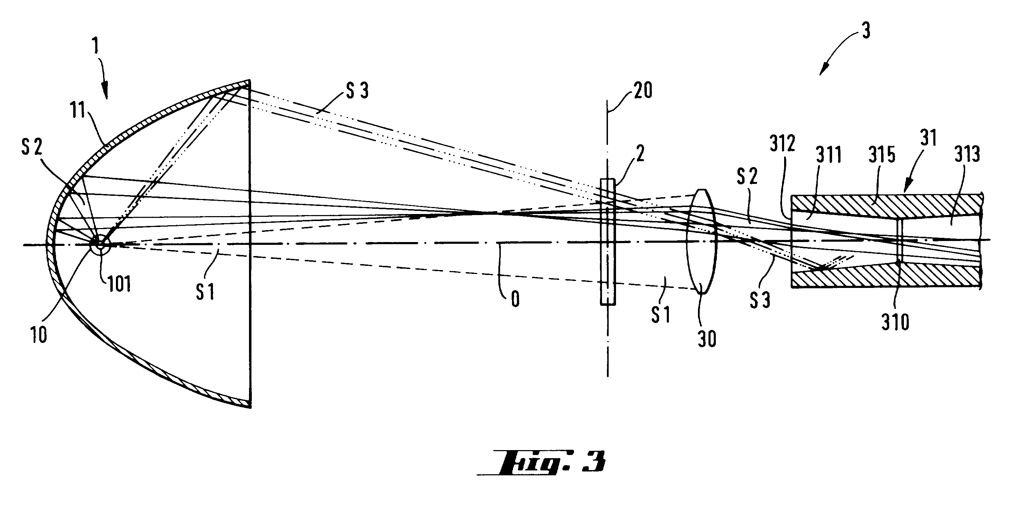

In Fig. 3 ist ein weiterer Ausschnitt des Beleuchtungssystems der Fig. 1a vergrössert dargestellt. Aus diesem Ausschnitt kann man besonders gut die drei wesentlichen Strahlgruppen erkennen, die zur Beleuchtung der Vorlage 4 beitragen. Dies ist zum einen die Strahlgruppe S1, die von der Glühwendel 101 der Lichtquelle 10 direkt in Richtung der Feldlinse 30 abgestrahlt wird. Weiterhin erkennt man eine zweite Strahlgruppe S2, die zunächst in Richtung von der Feldlinse 30 weg abgestrahlt, dann aber am Ellipsoid-Spiegel 11 reflektiert und in Richtung der Feldlinse 30 abgestrahlt werden. Schliesslich erkennt man noch eine dritte Strahlgruppe S3 von Strahlen, die an den äusseren Zonen des Ellipsoid-Spiegels 11 reflektiert und in Richtung der Feldlinse 30 abgestrahlt werden.

Während bei den beiden erstgenannten Strahlgruppen S1 und S2 aus der Betrachtung der Fig. 1a unmittelbar einleuchtet, dass Licht dieser Strahlgruppen aufgrund des Winkels, unter dem Strahlen dieser Strahlgruppen in den Lichtschacht 31 eintreten und aus diesem wieder austreten, auch zur Abbildung der Vorlage 4 beitragen und in die Eintrittspupille 5 der Abbildungsoptik eintreten können, ist dies für Strahlen der Strahlgruppe S3 nicht ersichtlich. Die Strahlen der Strahlgruppe S3 werden nämlich im Lichtschacht 31 totalreflektiert und weisen nach dem Austritt aus dem Lichtschacht 31 einen so grossen Winkel gegenüber der optischen Achse auf, dass sie eigentlich nicht in die Eintrittspupille 5 der Abbildungsoptik gelangen können. Eine nicht unwesentliche Anzahl der Kopiervorlagen (z.B. Negativbildfelder) weist jedoch Kratzer auf, die bei der Abbildung der Vorlage normalerweise mit auf das Papier abgebildet werden, beim Kunden aber in höchstem Masse unbeliebt sind. Solche Kratzer kommen auf dem Papier umso mehr zur Geltung, je stärker sie die von ihrem Ort auf dem Objekt ausgehenden Abbildungsstrahlen ablenken, da diese dann nicht in die Eintrittspupille 5 eintreten können, sodass auf diese Weise der Kontrast des Kratzers zum restlichen Bildinhalt grösser wird. Werden nun die Strahlen der Strahlgruppe S3, die normalerweise nicht in die Eintrittspupille 5 gelangen, von Kratzern (oder anderen Störungen in der Vorlage) in die Eintrittspupille 5 umgelenkt, so können sie zur Verringerung des Kontrasts der Kratzer zu dem restlichen Bildinhalt beitragen.

Wie eingangs bereits erwähnt, soll mit Hilfe des erfindungsgemässen Beleuchtungssystems ein Abbildungssystem geschaffen werden, welches auf einfache Art eine möglichst farbtreue Wiedergabe einer Vorlage ermöglicht, und es soll auch eine homogene bzw. gewünschte Intensitätsverteilung auf dem Negativ erzielt und die Abbildung von Strukturen der Filtergläser bzw. auch ihrer Ränder vermieden werden. Zu diesem Zweck muss die Einfärbeeinrichtung 2 an einem ganz bestimmten Ort im Strahlengang angeordnet sein. Dieser Ort, hängt von den einzelnen Komponenten des Beleuchtungssystems ab und lässt sich auf eine "rekursive" Art und Weise berechnen, die nachfolgend beispielhaft unter Zuhilfenahme der Fig. 1b erläutert wird. Zum besseren Verständnis sollen aber zunächst noch einige Vorbemerkungen erfolgen.

In Fig. 1a ist ein von der Eintrittspupille 5 der Abbildungsoptik ausgehender Strahlkegel 52 zu erkennen, der durch zwei Strahlen 521 und 522 repräsentiert ist, die den Rand der Eintrittspupille 5 beaufschlagen, sowie durch einen Strahl 520, der am Ort der Eintrittspupille 5 die optische Achse O des Systems schneidet. Dieser Strahlkegel 52 entspricht dem Strahlkegel, der von einem Randpunkt 42 auf der Vorlage 4 ausgeht und vollständig in die Eintrittspupille 5 der Abbildungsoptik eintritt, also zur Abbildung der Vorlage 4 bzw. eines Randpunkts 42 der Vorlage beiträgt.

Weiterhin ist in Fig. 1a auch ein Strahlkegel 53 zu erkennen, der von einem Axialpunkt 43 auf der Vorlage 4 ausgeht und vollständig in die Eintrittspupille 5 der Abbildungsoptik eintritt, mithin also zur Abbildung der Vorlage 4 bzw. eines Axialpunkts 43 der Vorlage beiträgt. Aus Symmetriegründen und aus Gründen der besseren Übersichtlichkeit wurde nur der Axialstrahl 530 und ein Randstrahl 531 angedeutet.

Verfolgt man zunächst den Strahlkegel 52, der durch den Randpunkt 42 der Vorlage 4 verläuft, zurück, so schneidet der Strahl 520, der am Ort der Eintrittspupille 5 die optische Achse O schneidet, die optische Achse O auch in einer Ebene 20, die sich senkrecht zur optischen Achse erstreckt. Die Randstrahlen 521 und 522 hingegen verlaufen am Ort der Einfärbeeinrichtung 2 oberhalb und unterhalb der optischen Achse O. Verfolgt man den Strahlkegel 53 zurück, so verläuft natürlich der Axialstrahl 530 ebenfalls auf der optischen Achse O am Ort der Ebene 20, der Strahl 531 oberhalb der optischen Achse. Symmetrisch dazu würde der andere Randstrahl verlaufen.

Mit anderen Worten ausgedrückt bedeutet dies, dass am Ort der Ebene 20 der Lichtkegel 52, der durch den Randpunkt 42 der Vorlage verläuft, und der Lichtkegel 53, der durch den Axialpunkt 43 verläuft, am Ort der Ebene 20 die grösste gemeinsame Querschnittsfläche zwischen der Lichtquelle und der optischen Einheit 3 bzw. der Feldlinse 30 aufweisen. Am Ort dieser Ebene 20 ist die Einfärbeeinrichtung 2 angeordnet.

Dieser Ort der Ebene 20, an dem die Einfärbeeinrichtung angeordnet ist, lässt sich rekursiv berechnen, wie bereits weiter oben angedeutet. Dabei ist der Abstand $d_0$ zwischen der Eintrittspupille 5 und der Ebene der Vorlage 4, der Abstand $d_1$ zwischen der Vorlage 4 und der Austrittsfläche des Lichtschachts 31, die Länge $d_2$ des Lichtschachts 31, der Abstand $d_3$ zwischen der Eintrittsfläche 312 des Lichtschachts 31 und der Feldlinse 30, sowie die Dicke $d_4$ der Feldlinse 30 gegeben. Diese Abstände hängen von den spezifischen Daten der einzelnen Komponenten, unter anderem auch von der gewünschten Vergrösserung bei der Abbildung der Vorlage 4, etc., ab.

Gesucht ist der Abstand $d_x$ der oben bereits erwähnten Ebene 20 von der der Lichtquelle 10 zugewandten Fläche der Feldlinse 30, in welcher ein am Ort der Eintrittspupille 5 die optische Achse O schneidender Strahl 520 die optische Achse O zwischen der Lichtquelle 10 und der Feldlinse 30 schneidet. An diesem Ort muss nämlich die Einfärbeeinrichtung 2 angeordnet werden. Durch die Anordnung der Einfärbeeinrichtung 2 an diesem Ort erreicht man nämlich, dass die Abbildung von Strukturen und Formen (Ränder) der Filtergläser vermieden wird, wodurch es auch möglich ist, die Beleuchtungsintensität zu ändern (durch Bewegen der Filtergläser tiefer in den Strahlengang hinein), ohne die Homogenität der Intensitätsverteilung wesentlich zu beeinträchtigen. Es ist auf diese Weise insbesondere möglich, die Intensität auch dann im wesentlichen homogen zu variieren, wenn die Filtergläser, z.B. mechanisch bedingt, nicht genau gleich tief in den Strahlengang bzw. in den Lichtkegel eingetaucht sind. Im Extremfall ist es sogar möglich, ein Filterglas völlig asymmetrisch in den Lichtkegel einzuführen und die Beleuchtungsintensität zu variieren ohne die Homogenität der Intensitätsverteilung wesentlich zu beeinträchtigen.

Der Ort der Ebene 20 lässt sich folgendermassen berechnen, wobei $y_i$ den Abstand des Strahls 520 von der optischen Achse O an ausgezeichneten Punkten bedeutet. Diese ausgezeichneten Punkte werden im folgenden noch näher bezeichnet. Der Strahlwinkel $\alpha_{i+1}$, den der Strahl 520 im i+1-ten Medium nach der i-ten Grenzfläche zwischen zwei Medien mit unterschiedlichen Brechungsindices $n_i$ und $n_{i+1}$ mit der optischen Achse O einschliesst, berechnet sich dabei aus der Gleichung

$$(1) \qquad n_{i+1}\alpha_{i+1} = n_i\alpha_i + y_i(n_{i+1} - n_i)/r_i$$

und der Abstand $y_{i+1}$ an der (i+1)-ten Grenzfläche aus der Gleichung

$$(2) \qquad y_{i+1} = y_i - d_i\alpha_{i+1}$$

Im folgenden soll beispielhaft eine solche Berechnung für den Strahl 520 durchgeführt werden, der am Ort der Eintrittspupille 5 die optische Achse O des Systems schneidet und der durch einen Randpunkt 42 der Vorlage 4 verläuft. Beginnend von der Eintrittspupille 5 der Abbildungsoptik ist zunächst der Anfangsstrahlwinkel $\alpha_0$ zu ermitteln. Der Abstand des Randpunkts auf der Vorlage von der optischen Achse O betrage dabei $y_0$ und der Abstand der Abbildungsoptik bzw. deren Eintrittspupille 5 von der Vorlage 4 betrage $d_0$. Als Randbedingung für den Strahlwinkel $\alpha_0$ gilt:

$$(3) \qquad \alpha_0 = \arctan(y_0/|d_0|) \approx y_0/|d_0| \text{ für kleine Winkel } \alpha_0$$

Der Winkel $\alpha_1$ des Strahls 520 nach der Vorlage 4 stimmt mit dem Winkel $\alpha_0$ überein. Dadurch ergibt sich für den Abstand $y_1$ am Ort der Austrittsfläche des Lichtsschachts 31, die von der Ebene der Vorlage 4 um die Strecke $d_1$ entfernt ist:

$$(4) \qquad y_1 = y_0 \, (1 - d_1/d_0),$$

wobei zu berücksichtigen ist, dass hier $d_0$ selbst ein negativer Zahlenwert ist (der Nullpunkt liegt in der Ebene der Vorlage), so dass der Abstand $y_1$ von der optischen Achse grösser ist als der Abstand $y_0$, wie auch unschwer der Fig. 1b zu entnehmen ist. Der Winkel $\alpha_2$ vor der Lichtaustrittsfläche, also im Lichtschacht 31, lässt sich mit der Gleichung (1) dann ermitteln zu

$$(5) \qquad \alpha_2 = \alpha_1/n_2 + ((n_2 - n_1)/r_1 n_2)y_1.$$

An der Lichteintrittsfläche des Lichtschachts 31, der eine Länge $d_2$ aufweist, beträgt dann gemäss Gleichung (2) der Abstand des Strahls 520 von der optischen Achse O:

$$(6) \qquad y_2 = y_1 - d_2 \alpha_2$$

Vor dem Eintritt in den Lichtschacht 31, also zwischen Lichtschacht 31 und Feldlinse 30, ergibt sich der Winkel $\alpha_3$ aus Gleichung (1) zu:

$$(7) \qquad \alpha_3 = \alpha_2(n_2/n_3),$$

da die Lichteintrittsfläche eben ist und somit einen Radius $r_2 = \infty$ aufweist, sodass der Restterm mit $r_2$ im Nenner (siehe Gleichung (1)) wegfällt. An der Austrittsfläche der Feldlinse 30, die im Abstand $d_3$ von der Eintrittsfläche des Lichtschachts 31 angeordnet ist, beträgt der Abstand $y_3$ des Strahls 520 von der optischen Achse O somit:

$$(8) \qquad y_3 = y_2 - d_3 \alpha_3.$$

In der Feldlinse 31, deren Austrittsfläche einen Radius $r_3$ aufweist, beträgt dann der Winkel $\alpha_4$ des Strahls 520

$$(9) \qquad \alpha_4 = \alpha_3 \, (n_3/n_4) + y_3 \, (1-(n_3/n_4))/r_3,$$

und der Abstand $y_4$ des Strahls 520 beträgt dann an der Eintrittsfläche der Feldlinse 30

$$(10) \qquad y_4 = y_3 - d_4 \alpha_4,$$

wobei $d_4$ für die Dicke der Feldlinse 30 steht. Daraus ergibt sich wiederum der Winkel $\alpha_5$ des Strahls 520 vor der Eintrittsfläche der Feldlinse 30 zu

$$(11) \qquad \alpha_5 = \alpha_4(n_4/n_5) + y_4(1-(n_4/n_5))/r_4,$$

wobei $r_4$ für den Radius der Eintrittsfläche der Feldlinse 30 steht.

Schlussendlich ergibt sich für den Abstand $y_5$ des Strahls 520 vor der Eintrittsfläche der Feldlinse 30

$$(12) \qquad y_5 = y_4 - d_x \alpha_5,$$

wobei $d_x$ den Abstand eines Punktes x von der Eintrittsfläche der Feldlinse 30 bezeichnet. Da an dem Ort, an welchem die Einfärbeeinrichtung 2 im Strahlengang angeordnet werden muss, um die eingangs genannten Wirkungen zu erzielen, die Strahlhöhe $y_5$ den Wert 0 annehmen muss, ist die Gleichung (12) so umzuformen, dass $d_x$ ermittelt werden kann. Hieraus folgt:

$$(13) \qquad d_x = (y_4 - y_5)/\alpha_5,$$

woraus sich der Abstand $d_x$ von der Eintrittsfläche der Feldlinse 30 ergibt und somit der Ort bestimmt ist, an dem die Einfärbeeinrichtung 2 in den Strahlengang eingebracht werden muss. Die Ausbildung der Einfärbeeinrichtung 2 selbst ist nicht Gegenstand der Erfindung und wird daher auch nicht näher beschrieben. Sie kann daher konventionell sein, beispielsweise kann sie so ausgebildet sein wie in der DE-A-32 26 408 beschrieben; ebenso sind aber auch andere Einfärbeeinrichtungen geeignet.

Beim Betrieb des Beleuchtungssystems wird zunächst ohne Vorlage 4 die Intensitätsverteilung in einer Farbe (z. B. rot) am Bildort, also beispielsweise in der Ebene des Kopiermaterials, auf das die Vorlage 4 abgebildet wird, eingestellt. Die Intensitätsverteilung kann dabei durch die entsprechende axiale Verschiebung der Lichtquelle 10 um den ersten Brennpunkt F1 des Ellipsoid-Spiegels 11 herum variiert werden. Am Bildort kann die Messung der Intensitätsverteilung beispielsweise durch Photodioden oder Photodiodenarrays erfolgen. Anschliessend an diese Messung ohne Vorlage wird ein Streuelement zur Simulation streuender Objektstrukturen am Ort der Vorlage 4 in den Strahlengang eingebracht und die Intensität am Bildort erneut gemessen. Das Verhältnis der gemessenen Intensitäten, also das Verhältnis "Intensität am Bildort mit Streuelement am Ort der Vorlage" zu "Intensität am Bildort ohne Streuelement am Ort der Vorlage" soll im Bereich von etwa 0.6 bis etwa 0.9, vorzugsweise im Bereich von 0.7 bis 0.8 liegen.

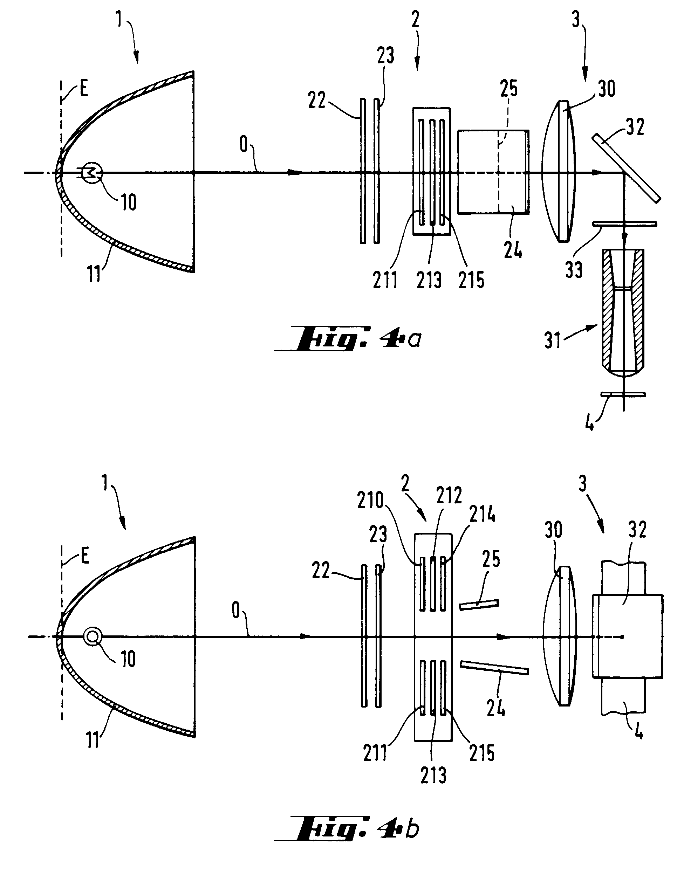

Ein weiteres Ausführungsbeispiel des erfindungsgemässen Beleuchtungssystems ist in den Fig. 4a und 4b dargestellt. Es umfasst wie das in Fig. 1a dargestellte Ausführungsbeispiel ein Lampenhaus 1 mit einer Lichtquelle 10 und einem Ellipsoid-Spiegel 11, eine Einfärbeeinrichtung 2, von der einige Filtergläser 210,211,212,213,214 und 215 angedeutet sind, sowie eine optische Einheit 3 mit einer Feldlinse 30 und einem Lichtschacht 31, der das Licht auf die Vorlage 4 führt. Zusätzlich umfasst dieses Ausführungsbeispiel auch noch ein Wärmeschutzfilter 22, ein Kammfilter 23, sowie zwei Korrekturplatten 24 und 25. Die optische Einheit 3 umfasst ausserdem noch einen Strahlteiler 32, der zwischen der Feldlinse 30 und dem Lichtschacht 31 angeordnet ist und einen Teil des Lichts (Transmissionsgrad z.B. etwa 5%) für eine Lichtmessung aus dem Strahlengang auskoppelt. Eine solche Messung kann zum Beispiel für eine Messung der Helligkeit des gesamten Lichtkegels und damit auch zur Regelung der Position der Filtergläser verwendet werden, indem in Abhängigkeit vom Messergebnis die Filtergläser der Einfärbeeinrichtung 2 tiefer in den Lichtkegel hinein bzw. weiter aus dem Lichtkegel heraus geschwenkt werden. Ferner kann die optische Einheit 3 auch noch ein Ausgleichsfilter 33 umfassen, welches zur Dämpfung von dominanten Spektralanteilen bzw. Spektralbereichen dient.

Der Zweck des Wärmeschutzfilters 22 ist unmittelbar durch seinen Namen einleuchtend. Das Kammfilter 23, bei dem der Zweck sich nicht unmittelbar aus seinem Namen ergibt (sondern eher für seine Transmissionscharakteristik), ist nur für Licht in den Spektralbereichen transparent, für die das Kopiermaterial empfindlich ist, und unterdrückt bzw. dämpft sehr stark die anderen Spektralanteile des vom Lampenhaus kommenden Lichts.

Die Korrekturplatten 24 und 25 dienen der Unterstützung der Homogenisierung bzw. zur Erzeugung einer gewünschten Intensitätsverteilung auf der Vorlage. Sie dienen insbesondere zur Korrektur von asymmetrischen, in Abhängigkeit vom Strahlwinkel unterschiedlichen, Intensitäten. Dann können Inhomogenitäten durch diese Korrekturplatten 24 und 25 ausgeglichen werden, indem Teile der einen Lichtkegelhälfte in die andere Lichtkegelhälfte umgelenkt werden. Derartige Korrekturplatten können beispielsweise als einseitig streuende Strahlteilerplatten realisiert sein, wobei die streuende Fläche dem Lichtkegel abgewandt (also aussen) sein kann.

Mit einem solchen Beleuchtungssystem, wie es anhand der Ausführungsbeispiele erläutert ist, erreicht man, dass die Abbildung äusserer Formen (Ränder) sowie ungleichmässiger Transmissionseigenschaften (Dichtestrukturen) der Filtergläser vermieden wird, wodurch es auch möglich ist, die Beleuchtungsintensität zu ändern (durch Bewegen der Filtergläser tiefer in den Strahlengang hinein), ohne die Homogenität der Intensitätsverteilung wesentlich zu beeinträchtigen. Es ist daher auf diese Weise insbesondere möglich, die Intensität auch dann im wesentlichen homogen zu variieren, wenn die Filtergläser, z.B. mechanisch bedingt, nicht genau gleich tief in den Strahlengang bzw. in den Lichtkegel eingetaucht sind. Im Extremfall ist es sogar möglich, ein Filterglas völlig asymmetrisch in den Lichtkegel einzuführen und die Beleuchtungsintensität zu variieren ohne die Homogenität der Intensitätsverteilung wesentlich zu beeinträchtigen. Solche Beleuchtungssysteme sind insbesondere geeignet für den Einsatz in fotografischen Printern bzw. für den Einsatz in vollautomatischen fotografischen Verarbeitungsstrecken.

## Patentansprüche

1. Beleuchtungssystem für fotografische Kopiergeräte, mit einem Lampenhaus (1), das einen Ellipsoid-Spiegel (11) und eine im Bereich des ersten Brennpunkts (F1) dieses Ellipsoid-Spiegels (11) angeordnete Lichtquelle (10) umfasst, mit einer im Strahlengang vor der Ebene der zu kopierenden Vorlage (4) angeordneten konvergierenden optischen Einheit (3), die eine Feldlinse (30), einen im Strahlengang dieser Feldlinse (30) nachgeschalteten Lichtschacht (31) und eine Streuscheibe (310) umfasst, zur Erzeugung einer gewünschten Verteilung der Beleuchtungsintensität in der Ebene der Vorlage (4), wobei die Vorlage (4) mittels einer im Strahlengang nach der Vorlagenebene angeordneten Abbildungsoptik auf fotografisches Kopiermaterial abgebildet wird, und mit einer Einrichtung (2) zum Einfärben des die Vorlage beaufschlagenden Lichts, welche Einrichtung (2) im Strahlengang vor der optischen Einheit (3) angeordnet ist und Farbfilter umfasst, die in einer zur optischen Achse (O) senkrechten Ebene (20) in den Strahlengang hinein und aus diesem heraus bewegbar sind, dadurch gekennzeichnet, dass die Lichtquelle (10) entlang der optischen Achse (O) verschiebbar ist, dass die Einrichtung (2) zum Einfärben des Lichts im Strahlengang zwischen der Lichtquelle (10) und der optischen Einheit (3) so angeordnet ist, dass ein Strahl (520), der durch einen Randpunkt (42) der Vorlage (4) verläuft und am Ort der Eintrittspupille (5) der Abbildungsoptik die optische Achse (O) kreuzt, auch am Ort der Einrichtung (2) zum Einfärben die optische Achse (O) kreuzt, und dass der Lichtschacht (31) zwei von einem reflektierenden Zylinder (315) umgebene kegelstumpfartige Glaskörper (311,313) umfasst, zwischen denen die Streuscheibe angeordnet ist, wobei die der Streuscheibe (310) abgewandte Begrenzungsfläche des lichtausstrittseitigen Glaskörpers (313), also die Lichtaustrittsfläche (314), konvex ausgebildet ist.

2. Beleuchtungssystem nach Anspruch 1, dadurch gekennzeichnet, dass die Feldlinse im Bereich des zweiten Brennpunkts (F2) des Ellipsoid-Spiegels (11) angeordnet ist, und dass der im Strahlengang der Feldlinse (30) nachgeschaltete Lichtschacht (31), in welchem eine Streuscheibe (310) vorgesehen ist, in einem solchen Abstand ($d_3$) von der Feldlinse angeordnet ist, dass diese eine durch den Scheitel des Ellipsoid-Spiegels (11) bzw. eine zwischen dem Scheitel und dem ersten Brennpunkt (F1) verlaufende und zur optischen Achse (O) senkrechte Ebene auf die Streuscheibe (310) abbildet.

3. Beleuchtungssystem nach einem der Ansprüche 1 oder 2, dadurch gekennzeichnet, dass zwischen der Einrichtung (2) zum Einfärben des Lichts und der optischen Einheit (3) zur Erzeugung einer gewünschten Intensitätsverteilung Korrekturplatten (24,25) angeordnet sind zur Unterstützung der Homogenisierung bzw. zur Erzeugung einer gewünschten Intensitätsverteilung auf der Vorlage (4).

4. Beleuchtungssystem nach einem der Ansprüche 1 bis 3, dadurch gekennzeichnet, dass der optischen Einheit (3) bzw. dem Lichtschacht (31) ein Strahlteiler (32) vorgeschaltet ist, der einen Teil des Lichts für eine Lichtmessung aus dem Strahlengang auskoppelt.

5. Beleuchtungssystem nach einem der Ansprüche 1 bis 4, dadurch gekennzeichnet, dass der Einrichtung (2) zum Einfärben des Lichts ein Wärmeschutzfilter (22) und ein Kammfilter (23) vorgeschaltet ist, welches nur für Licht in den Spektralbereichen transparent ist. für die das Kopiermaterial empfindlich ist.

## Claims

1. Illumination system for photographic copying equipment, having a lamp housing (1), which includes an ellipsoidal mirror (11) and a light source (10) arranged in the region of the first focus (FI) of this ellipsoidal mirror (11), having a converging optical unit (3) arranged, for the generation of a desired distribution of the illumination intensity in the plane of the original (4) to be copied, in the ray path before the plane of the original (4), which converging optical unit (3) includes a field lens (30), a light shaft (31) and a scatter disc (310) arranged downstream in the ray path of this field lens (30), whereby an image of the original (4) is formed on photographic copying material by means of imaging optics arranged in the ray path after the plane of the original, and having a device (2) for colouring the light acting on the original, which device (2) is arranged in the ray path before the optical unit (3) and includes colour filters which can be moved into the ray path and out of it in a plane (20) at right angles to the optical axis (O), characterized in that the light source (10) can be displaced along the optical axis (O), in that the device (2) for colouring the light in the ray path is arranged between the light source (10) and the optical unit (3) in such a way that a ray (520) which extends through an edge point (42) of the original (4) and crosses the optical axis (O) at the location of the inlet aperture (5) of the imaging optics also crosses the optical axis (O) at the location of the colouring device (2), and in that the light shaft (31) includes two glass bodies (311, 313), of truncated-cone type, surrounded by a reflecting cylinder (315), the scatter disc being arranged between which glass bodies (311, 313), whereby the boundary surface of the emergent light end of the glass body (313) facing away from the scatter disc (310), i.e. the light outlet surface (314), is of convex configuration.

2. Illumination system according to Claim 1, characterized in that the field lens is arranged in the region of the second focus (F2) of the ellipsoidal mirror (11) and in that the light shaft (31), which is arranged downstream in the ray path of the field lens (30) and in which a scatter disc (310) is provided, is arranged at such a distance ($d_3$) from

the field lens that the latter forms an image on the scatter disc (310) of a plane at right angles to the optical axis (O) and either extending through the apex of the ellipsoidal mirror (11) or extending between the apex and the first focus (F1).

3. Illumination system according to one of Claims 1 or 2, characterized in that, in order to support the homogenisation of or generation of a desired intensity distribution on the original (4), correction plates (24, 25) are arranged between the device (2) for colouring the light and the optical unit (3) for generating a desired intensity distribution.

4. Illumination system according to one of Claims 1 to 3, characterized in that a beam splitter (32) is located upstream of the optical unit (3), or of the light shaft (31), which beam splitter decouples part of the light from the ray path for a light measurement procedure.

5. Illumination system according to one of Claims 1 to 4, characterized in that a thermal protection filter (22) and a comb filter (23) are located upstream of the device (2) for colouring the light, which comb filter (23) is only transparent to light in the spectral regions to which the copying material is sensitive


**Revendications**

1. Système d'éclairement pour tireuses photographiques, comportant un boîtier de lampe (1) qui comprend un miroir ellipsoïde (11) et une source lumineuse (10) disposée au voisinage du premier loyer (F1) de ce miroir ellipsoïde (11), comportant un sous-ensemble optique convergent (3) qui est disposé sur le trajet des rayons, en avant du plan du négatif à tirer (4) et qui comprend une lentille de champ (30), un puits de lumière (31) placé en aval sur le trajet des rayons de cette lentille de champ (30) et un diffuseur (31()), pour produire une répartition désirée de l'intensité de l'éclairement dans le plan du négatif à tirer (4), dans lequel le négatif à tirer (4) donner une image sur un matériau support de tirage photographique au moyen d'une optique de Formation d'image disposée sur le trajet des rayons, après le plan du négatif, et comportant un dispositif (2) pour rendre monochromatique la lumière qui tombe sur le négatif, dispositif (2) qui est disposé sur le trajet des rayons en avant du sous-ensemble optique (3) et qui comprend des filtres colorés qui peuvent se déplacer dans un plan (20) perpendiculaire à l'axe optique (O) pour entrer sur le trajet des rayons et en sortir, caractérisé par le fait que la source lumineuse (10) peut coulisser le long de l'axe optique (O), que le dispositif (2) prévu pour rendre monochromatique la lumière est disposé sur le trajet des rayons, entre la source lumineuse (10) et le sous-ensemble optique (3), qu'un rayon (520), qui passe par un point de bordure (42) du négatif (4) et intersecte l'axe optique (O) à l'endroit de la pupille d'entrée (5) de l'optique de formation d'image, intersecte également l'axe optique (O) à l'endroit du dispositif (2) prévu pour rendre la lumière monochromatique et que le puits de lumière (31) comprend deux éléments tronconiques en verre (311, 313), qui sont entourés par un cylindre réfléchissant (315) et entre lesquels est disposé le diffuseur, la surface limite de l'élément en verre (313) située du côté de la sortie de la lumière étant opposée au diffuseur (310), c'est-à-dire que la surface de sortie de la lumière (314) est de forme convexe.

2. Système d'éclairement selon la revendication 1, caractérisé par le fait que la lentille de champ est disposée au voisinage du second foyer (F2) du miroir ellipsoïde (II) et que le puits de lumière (31), qui est placé en aval de la lentille de champ (30) sur le trajet des rayons et dans lequel est prévu un diffuseur (310) disposé à une distance ($d_3$) de la lentille de champ telle que celle-ci donne sur le diffuseur (31()) l'image d'un plan passant par le sommet du miroir ellipsoïde (11) ou entre le sommet et le premier foyer (F1) et perpendiculaire à l'axe optique (O).

3. Système d'éclairement selon l'une des revendications 1 ou 2, caractérisé par le fait qu'entre le dispositif (2) prévu pour rendre monochromatique la lumière et le sous-ensemble optique (3) prévu pour produire une répartition désirée de l'intensité sont disposées des plaques correctrices (24, 25) pour aider l'homogénéisation ou pour produire sur le négatif (4) une répartition désirée de l'intensité.

4. Système d'éclairement selon l'une des revendications 1 à 3, caractérisé par le fait qu'en avant du sous-ensemble optique (3) ou du puits de lumière (31) est placé un diviseur de faisceau (32) qui découple du trajet des rayons une partie de la lumière pour effectuer une mesure photométrique.

5. Système d'éclairement selon l'une des revendications 1 à 4, caractérisé par le fait qu'en avant du dispositif (2) prévu pour rendre monochromatique la lumière, sont placés un filtre de protection contre la chaleur (22) et un filtre de répartition (23) qui n'est transparent à la lumière que sur les plages spectrales pour lesquelles le matériau support de tirage est sensible.

**Fig. 1a**

EP 0 586 771 B1

Fig. 1b

EP 0 586 771 B1

*Fig. 2*

*Fig. 3*

*Fig. 4a*

*Fig. 4b*